# EUROPEAN PATENT SPECIFICATION

(11) **EP 3 820 781 B1**
(45) Date of publication and mention of the grant of the patent: **04.12.2024**
(21) Application number: 19834264.4
(22) Date of filing: 10.07.2019
(51) Int. Cl.: B65D 25/48, B65D 25/20, F16L 35/00, B65D 51/24, F01M 11/04

(54) **FLUID DISPENSING APPARATUS AND METHOD**
VORRICHTUNG UND VERFAHREN ZUR FLÜSSIGKEITSAUSGABE
APPAREIL ET PROCÉDÉ DE DISTRIBUTION DE FLUIDE

(30) Priority: 11.07.2018 AU 2018902510
(43) Date of publication of application: 19.05.2021
(73) Proprietor: Nulon Products Australia PTY Ltd., Moorebank, New South Wales 2170 (AU)
(72) Inventor: SIMONS, John, Moorebank, New South Wales 2170 (AU)
(74) Representative: Savoca, Agatino
(86) International application number: PCT/AU2019/050724
(87) International publication number: WO 2020/010397

(56) References cited:
- JP-U- S 484 070
- US-A- 2 966 320
- US-A- 4 903 922
- US-A- 5 447 110
- US-A- 6 006 935
- US-A- 6 045 013
- US-A1- 2016 257 082

## Description

### FIELD OF THE INVENTION

The present invention relates to an apparatus and method for dispending a fluid from a container into components located in confined areas, such as, for example, areas within engine bays of automobiles and marine vehicles. The present invention finds particular use in dispensing oils and lubricants from containers into, for example, components associated with motor vehicle engines, drive lines, gear boxes, differentials and out-board motors of marine vehicles during the servicing of motor or marine vehicles.

### BACKGROUND OF THE INVENTION

Engine oil (also commonly referred to as motor oil, automotive lubricant or engine lubricant) includes one or more substances comprising base oils enhanced with additives, particularly anti-wear detergents, dispersants and viscosity improvers, that are required to properly service and maintain automobile engines. Most manuals for newer vehicles recommend the engine oil be changed every 5,000 miles (approx. 8,000 km) under normal conditions. However, it is typically recommended that under severe driving conditions, for example, driving in freezing temperatures, short trips with numerous stops and starts, low speeds for long distances, towing trailers/caravans or driving on roads that are dusty, muddy and have sand/gravel spread on the surface, the engine oil be changed every 3,000 miles (approx. 5,000km).

Whilst some motor vehicle owners will rely on having the engine oil changed during periodic servicing of their vehicle (usually every six months), most owners will prefer to change the oil on a more regular basis since it is commonly known and accepted that changing the engine oil of a vehicle is the best and most effective form of vehicle maintenance. Accordingly, many motor vehicle owners are now electing to adopt a Do-It-Yourself (DIY) approach to changing the engine oil of their motor vehicle in an effort to increase the intervals between having to service their vehicles by an authorised/registered automobile service department thereby saving on costs associated with frequent servicing of their motor vehicle.

However, there are a number of difficulties associated with the DIY approach to changing the oil of a motor vehicle. For example, adding oil/transmission fluid to an automobile engine, transmission, gear box or differential is quite difficult since the service space within and around an engine bay under the hood (bonnet) of a vehicle is small and accordingly, difficult to move and maneuver within. As a result, there is a high risk/incidence of fluid spillage and therefore wastage, in addition to the undesirable task of having to clean any spillage.

Engine oils and the like are provided to consumers in bulky and rigid plastic containers that are difficult to handle, particularly in confined spaces such as those encountered within and around a vehicle engine bay. Accordingly, in an effort to increase the ease with which fluid is dispensed from such containers, consumers are often required to purchase, in addition to the engine fluid, a 1 liter pump system which adds to the cost for consumers.

Whilst such pump systems are marketed as being able to assist in the dispensing of fluid from the bulky/rigid containers, the reality is that the process of dispensing fluid from the container into a vehicle engine using such pump systems is nevertheless slow and awkward and still has the potential to cause spillage which is undesirable for obvious reasons.

Furthermore, due to the bulky, rigid configuration of the containers in which engine oil is contained, it is difficult, if not impossible, to drain all of the oil from the container thereby adding to further wastage and cost to the consumer.

In addition, display shelving in retail outlets commonly have associated height and space restrictions which is problematic for displaying fluid dispensing containers, particularly when such containers are rigid and/or awkwardly shaped and have various components (for example, hoses, nozzles and the like) that extend outside the container footprint. This typically requires the size of such containers to be limited in order to accommodate any components extending outside the container footprint within the available retail shelving with height and space restrictions. US 4 903 922 A discloses the preamble of claim 1.

Accordingly, there exists a need for an apparatus and method that that ameliorates, or at least provides an alternative to, conventional apparatus and methods for dispensing fluids from containers, for example, during the addition of oil to an automobile engine during servicing of same.

### SUMMARY OF THE INVENTION

In a first aspect, the present invention provides a bracket configured to accommodate a hose operable to dispense fluid, the bracket including at least first and second portions extending along two different axes such that when the hose is accommodated by the first and second portions of the bracket, the first and second portions cause the hose to bend, wherein a distal end of the first portion is in the form of an annular ring and a distal end of the second portion is in the form of a curved arm, and wherein the bracket further includes at least one projection configured to engage an outlet portion of a container within which the fluid that is to be dispensed is contained to thereby retain the bracket in connection with the container when the container is in a sealed state.

It will be appreciated that retention of the hose within the bracket may assist to maintain the hose in a rigid configuration which avoids, or at least minimises, kinking of the hose which could otherwise restrict the flow of fluid during dispensing of same. Retention of the hose within the bracket may also facilitate the handling (i.e., the ease with which the hose is able to be angled in any desired direction) during, for example, servicing of vehicle components. In this regard, it will be appreciated that hoses, due to their flexible nature, are at times difficult to direct and maneuver, particularly in confined and/or difficult to reach places, which may result in spillage and wastage of fluid during dispensing of same from a container.

In an embodiment, the two axes are oriented substantially between 80 to 100 degrees relative to one another.

In an embodiment, the two axes are oriented substantially at 90 degrees relative to one another.

Bending of the hose at an angle of between about 80 to 100 degrees, may assist in maneuvering the hose (when attached to a container) in difficult to reach, and/or confined spaces, such as those found in areas within an engine bay of a vehicle.

It will also be appreciated that the retention of the hose in a bent and rigid configuration substantially between 80 and 100 degrees, may not only facilitate the way in which the hose is able to be maneuvered and directed during servicing of, for example, vehicle components found in difficult to reach and/or confined spaces, but may also assist the way in which the bracket and hose are able to be releasably attached to a container for display purposes when the container is in a sealed state and offered for sale. Accordingly, in an embodiment, the bracket and hose are configured to enable them to be releasably attached to the container in a manner that does not interfere with the display of any advertising material located on an exterior surface of the container, and in a manner that enables the container, hose and bracket, to be displayed, stored and/or offered for sale as a single unit within retail or storage shelving of limited space and or restricted height.

It will be appreciated that such an arrangement may enable the hose to be readily removed/released from the bracket, whilst being able to be securely retained by the bracket when desired.

In an embodiment, the projection is in the form of an annulus.

In an embodiment, the projection is in the form of a cap that is configured to seal the outlet portion of the container when the projection is placed over the outlet portion of the container.

In an embodiment, the projection is configured to releasably engage the outlet portion of the container by snap-fit engagement. It will be appreciated that the ability to releasably engage the bracket from the outlet portion of the container by snap-fit engagement assists a user to readily detach the bracket from the container to thereby transition the apparatus from a "display mode" or "storage mode" (i.e., in which the hose and bracket are connected to the container for the purposes of display and/or storage) to a "dispensing-mode" (i.e., in which the hose and bracket are connected to the container by the use of the adapter inserted into, or otherwise located on, a distal end of the hose, to thereby achieve fluid communication between the outlet portion of the container and the hose, enabling the dispensing of fluid).

In an embodiment, the container is in a sealed state when the projection is placed over and engaged with the outlet portion of the container by snap-fit engagement. In this embodiment, the container is initially sealed by means of a cap, and the projection is placed over and engages, by snap-fit engagement, the cap (and thereby the outlet portion of the container) in order to retain and support the bracket onto the container.

In an alternative embodiment, the projection on the bracket is initially placed over the open (unsealed) outlet portion of the container and the container is subsequently sealed by means of a cap. In this embodiment, the projection may be engaged with the outlet portion of the container by means of snap-fit engagement, or alternatively, the cap itself may serve to retain and secure the projection (and hence the bracket), in connection with the container, thus obviating the need for a snap-fit engagement between the projection and container outlet portion.

In a second aspect, the present invention provides an apparatus configured to facilitate dispensing of fluid from a container, the apparatus including a hose defining a first flow diameter operable to dispense fluid, , an adapter defining a second flow diameter, the adapter configured to connect one end of the hose to an outlet of the container, the outlet of the container defining a third flow diameter, and a bracket configured to accommodate the hose, the bracket including at least first and second portions extending along two different axes such that when the hose is accommodated by the first and second portions of the bracket, the first and second portions cause the hose to bend, wherein a distal end of the first portion is in the form of an annular ring and a distal end of the second portion is in the form of a curved arm, and wherein a bracket further includes at least one projection configured to engage an outlet portion of the container to thereby retain the bracket in connection with the container when the container is in a sealed state.

It will be appreciated that having first, second and third flow diameters of substantially the same dimension may assist in avoiding, or at least minimising, any restriction in flow of fluid from the container interior to the dispensing end of the hose during dispensing of fluid. This may not only increase the rate at which fluid is dispensed from the container, but may also avoid, or at least minimise, leakage of fluid as a result of pressure build-up and potential bursting of the container during external compression that could otherwise occur as a result of any restriction in fluid flow.

In an embodiment according to the second aspect, the two axes along which the first and second portions of the bracket extend are oriented substantially 80 to 100 degrees, relative to one another.

In an embodiment according to the second aspect, the two axes are oriented substantially at 90 degrees relative to one another.

In an embodiment according to the second aspect, the projection on the bracket is in the form of an annulus.

In an embodiment according to the second aspect, the projection is configured to engage an outlet portion of the container to thereby retain and hold the bracket in connection with the container.

In an embodiment according to the second aspect, the projection is further configured to function as a sealing means or a cap that covers the outlet portion of the container when the projection is placed over the outlet portion of the container thereby substantially sealing the container.

In an embodiment according to the second aspect, the container is fabricated from a flexible material thereby enabling the container contents to be dispensed by action of applying an external compressive force to the container.

In a third aspect, the present invention provides a method of dispensing fluid from a container, the method including accommodating a hose operable to dispense fluid from the container by a bracket according to any of the claims 1 to 3, attaching a first end of the hose to an outlet portion of the container whilst the hose is accommodated by the bracket, and applying an external compressive force to the container in order to cause fluid within the container to be dispensed.

In a fourth aspect, the present invention provides a method of retaining a bracket according to any of the claims 1 to 3 and a fluid dispensing hose on a container when the container is in a sealed state, the method including, accommodating the hose by the bracket, and engaging the at least one projection on the bracket with the outlet portion of the container when the container is in a sealed state.

In a fifth aspect, the present invention provides a fluid dispensing assembly including, a container including, a substantially upright body, an outlet portion extending from an upper front corner of the container at a substantially obtuse angle relative to the upright body of the container, a according to any of the claims 1 to 3 for accommodating a hose, and a projection configured to engage the outlet portion of the container; wherein the projection is arranged relative to the first and second portions of the bracket such that when the projection and outlet portion of the container are engaged, the bracket is retained against the upright body the container, and the projection is angled relative to the first and second portions of the bracket such that when the projection and the outlet portion of the container are engaged, one portion of the first and second portions of the bracket extends substantially horizontally along a top edge of the container and the other portion of the first and second portions of the bracket extends substantially downwardly along the upright body of the container.

In an embodiment according to the fourth aspect of the present invention, the engagement of the at least one projection on the bracket with the cap is by snap-fit engagement.

It will be appreciated that the configuration of the bracket of the present invention enables the apparatus (i.e., container, bracket and hose) to be stored and/or displayed for sale as a single unit. The ability to retain the bracket and hose in connection with the container during display and/or storage of the apparatus is desirable since it avoids, or at least minimises, the risk of loss of the bracket and/or hose during periods of non-use (storage) or when the apparatus is displayed and offered for sale.

In addition, since the bracket is configured in a manner that achieves bending of the hose when the hose is retained by the bracket, the bracket (and hose) do not substantially extend beyond the outside edges (i.e., perimeter) of the container when the bracket is connected, by means of the projection, to the container. Accordingly, this assists in reducing the height of the apparatus as compared to the height of the apparatus that would be observed if the hose was connected to the outlet portion of the container in the absence of being retained by the bracket of the present invention. Accordingly, the apparatus of the present invention, according to one or more embodiments, may not only conserves shelving space, but may also meet shelving height restrictions which are often imposed in retail outlets.

### BRIEF DESCRIPTION OF THE DRAWINGS

Embodiments of the invention will now be described in further detail with reference to the accompanying figures in which:
Figure 1 is an illustration of a bracket according to an embodiment of the present invention shown in a side view.
Figure 2 is an illustration of the bracket of Figure 1 shown in a perspective view.
Figure 3 is an illustration an apparatus according to an embodiment of the present invention in a disassembled state showing how the bracket of Figure 1 (with hose) is attached to a container (in an unsealed state).
Figure 4 is an illustration the apparatus of Figure 3 when assembled in a "dispensing mode" according to an embodiment of the present invention.
Figure 5 is an illustration the apparatus when assembled in a "display/storage mode" according to an embodiment of the present invention.
Figure 6 is an illustration of a bracket (with hose) according to an alternative embodiment of the present invention shown in perspective view.
Figure 7 is an illustration of the bracket of Figure 6 shown in a different perspective view.

### DETAILED DESCRIPTION OF EMBODIMENT(S) OF THE INVENTION

For convenience, the invention will be described with respect to one or more particular embodiments, however it will be appreciated by those skilled in the art that the invention is not limited to these one or more particular embodiments.

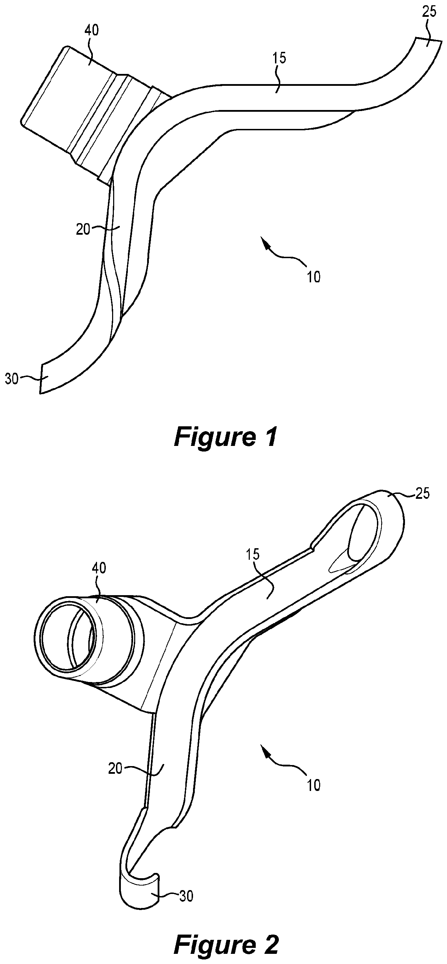

Referring to Figure 1, bracket 10 according to an embodiment of the present invention is shown in side-view. Bracket 10 according to an embodiment of Figure 1 includes first portion 15 and second portion 20 extending along two different axes that are substantially at 90 degrees relative to one another. Bracket 10 also includes projection 40, which, in this embodiment, is annular in configuration.

It will be appreciated that whilst the embodiment of Figure 1 includes first portion 15 and second portion 20 extending along two different axes substantially at 90 degrees relative to one another, other angles are possible, and in some embodiments, first portion 15 and second portion 20 extend along two different axes substantially between 80 and 100 degrees relative to one another.

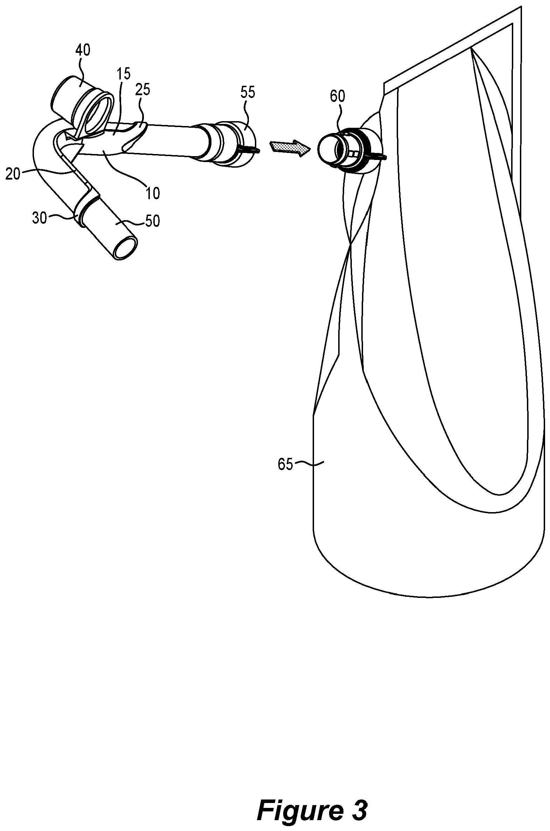

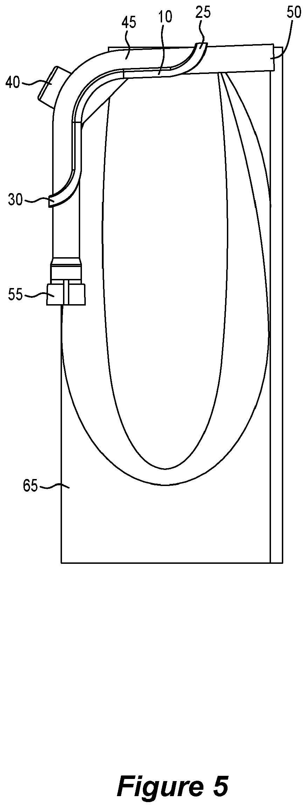

Retention of the hose in a bent and rigid configuration substantially between 80 and 100 degrees, and in particular 90 degrees, facilitates the way in which the hose is able to be maneuvered and directed during servicing of, for example, vehicle components found in hard to reach and/or confined spaces, but also assists the way in which the bracket and hose are able to be releasably attached to a container for display purposes when the container is in a sealed state and offered for sale (as is discussed further with reference to Figure 5). In particular, the configuration of the bracket 10 according to preferred embodiments enables the bracket (with hose - shown in Figure 3) to be releasably attached to a container in a manner that does not interfere with the advertising material on the container, and in a manner that enables the container, hose and bracket, to be displayed, stored and/or offered for sale as a single unit within retail or storage shelving of limited space and or restricted height.

Figure 2 illustrates bracket 10 shown in Figure 1 but in perspective view. In addition to projection 40, Figure 2 more clearly shows annular ring 25 located at a distal end of first portion 15 and also curved arm 30 located at a distal end of second portion 20.

However, in the embodiment shown in Figures 1 and 2, second portion 20 has a curved arm 30 which facilitates the insertion of a hose in bracket 10, and also facilitates the removal of a hose from bracket 10, whilst annular ring 25 serves to retain and maintain the hose in place.

The way in which a hose is retained by bracket 10 and thereby cause the hose to bend is shown in Figure 3. This figure shows bracket 10 including first portion 15 with annular ring 25 at its distal end through which hose 45 is inserted and retained in place. Hose 45 is also retained by bracket 10 by the use of curved arm 30 located at the distal end of second portion 20. Bracket 10 also includes projection 40, the purpose of which will be described in further detail herein with reference to Figure 5. Hose 45 also includes open end 50 (through which fluid is dispensed) and adapter 55, wherein adapter 55 serves to connect hose 45 to outlet portion 60 of container 65, in order to achieve fluid communication between the fluid contents of container 65 and hose 45. It will be appreciated that hose 45 may be connected to container 65 by any means known to persons skilled in the art and in the embodiment shown in Figure 3, adapter 55 has an internal thread (not shown) that is able to releasably engage a corresponding thread located on the external surface of outlet portion 60. In other embodiments, adapter 55 is able to releasably engage outlet portion 60 by a snap-fit engagement.

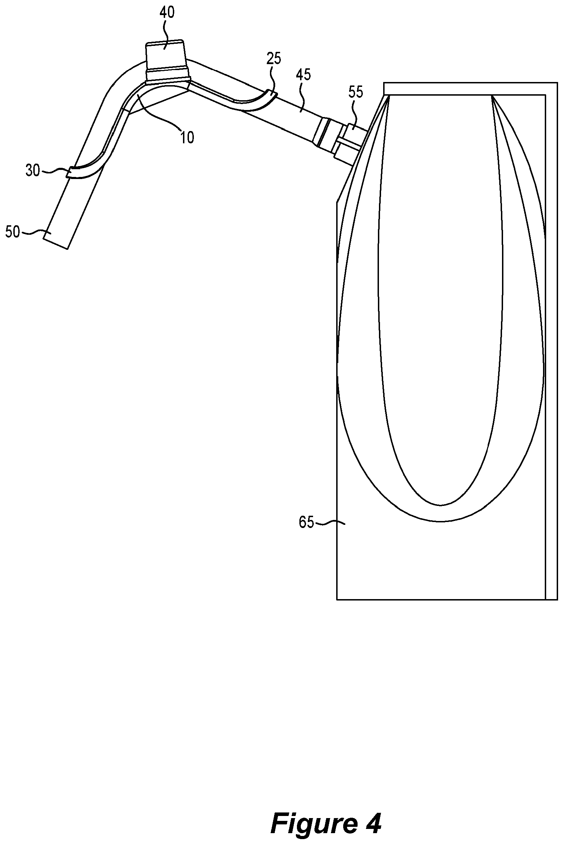

Figure 4 shows the assembled apparatus in accordance with an embodiment of the present invention in which hose 45, retained by bracket 10 in a bent configuration, is attached to outlet portion 60 (shown in Figure 3) of container 65. It will be appreciated that retention of hose 45 within the bracket 10 assists to maintain hose 45 in a rigid configuration which avoids, or at least minimises, kinking of the hose which could restrict the flow of fluid during dispensing of same from container 65. Retention of hose 45 by bracket 10 also facilitates the handling (i.e., the ease with which hose 45 is able to be angled and maneuvered) during, for example, servicing of vehicle components. In this regard, it will be appreciated that hoses, due to their flexible nature, are at times difficult to direct and maneuver, particularly in confined and hard to reach places, which may result in spillage and wastage of fluid during dispensing of same from a container.

When the apparatus is in an assembled state or in a "dispensing mode" as shown in Figure 4, the fluid contents of container 65 are able to be dispensed by the application of an external (manual) compressive force to container 65. In order to facilitate the ability to readily dispense the fluid contents of container 65 by the application of a manual compressive force, container 65 is manufactured from a flexible polymer, for example, low density polyethylene, that is able to be compressed (squeezed) and thereby readily dispense its contents.

The use of a container manufactured from a flexible material also minimises wastage of any of the fluid contents, since substantially all of the fluid is able to be dispensed and no contents remain in the container as is typically observed with containers made of a rigid material.

It will also be appreciated that the use and handling of a bulky and rigid container within a confined space is typically awkward and difficult, since a rigid and bulky container tends to take up more space as compared with a container made of a flexible material. Accordingly, the adoption of a container made of flexible material in combination with the bracket that maintains the hose in a bent configuration in accordance with the apparatus shown in Figure 4, further assists in achieving maneuverability and ease of use of the apparatus within confined spaces.

Figure 5 shows the apparatus of Figure 4 when in a "display"/"storage" mode and when the container is in a sealed state. In order to transition the apparatus shown in Figures 4 and 5 from a "dispensing" mode (as shown in Figure 4) to a "display"/"storage" mode, adapter 55 located on a distal end of hose 45 is disengaged from outlet portion 60 (shown in Figure 3) and outlet portion 60 is sealed by means of a screw-cap (not shown). Once container 65 is sealed, annular projection 40 is placed over outlet portion 60 (with screw-cap - not shown) and is urged into position so as to engage, by a snap-fit engagement, outlet portion 60 and thereby retain bracket (with hose) in connection with container 65 during display and/or storage of the apparatus.

It will be appreciated that the configuration of bracket 10 enables the apparatus (i.e., container, bracket and hose) to be stored and/or displayed for sale as a single unit. The ability to retain the bracket 10 and hose 45 in connection with the container 65 during display and/or storage of the apparatus is desirable since it avoids, or at least minimises, the risk of loss of the bracket 10 and/or hose 45 during periods of non-use (storage) or when the apparatus is displayed and offered for sale. In addition, since bracket 10 is configured in a manner that achieves bending of hose 45, the bracket (and hose) do not substantially extend beyond the outside edges (i.e., perimeter) of container 65 when the bracket 10 is connected, by means of projection 40, to container 65. Accordingly, the use of bracket 10 reduces the height of the apparatus as compared to the height of the apparatus that is observed when the hose is directly connected (through adapter 55) to the outlet portion 60 of container 65 in the absence of the use of bracket 10 during, for example, display and/or storage. Accordingly, the bracket shown in Figures 1 and 2 and the apparatus shown in Figures 2, 4 and 5, not only assists in conserving shelving space, but also assists in meeting shelving height restrictions which are often imposed in retail outlets.

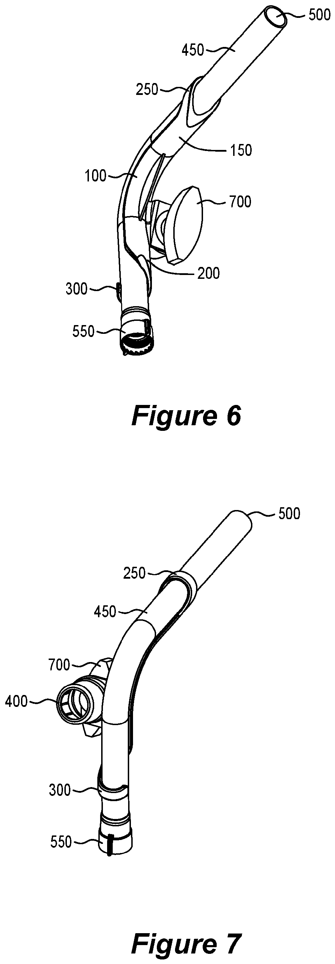

Figures 6 and 7 show the bracket of the present invention according to an alternative embodiment in which bracket 100 includes first portion 150 and second portion 200 that extend along two different axes substantially at 90 degrees relative to one another. Bracket 100 also includes annular ring 250 located on a distal end of first portion 150 and curved arm 300 located on a distal end of second portion 200. Bracket 100 retains hose 450 including an adapter 55 and open end 50 through which fluid is dispensed. Annular ring 250 and curved arm 300 of bracket 100 also retain hose 450 in place in the same manner as discussed with reference to the embodiment of Figure 3. As can also be seen from Figure 7, bracket 100 includes projection 400 which is used to connect bracket 100 (with hose 450) to a container (not shown), during periods of non-use when the container is required to be in a sealed state for display and/or storage. Projection 400 also includes cap 700 such that when projection 400 is placed over the outlet portion of a container, it also achieves sealing of the container contents at the same time. Accordingly, in the embodiment shown in Figures 6 and 7, there is no need to seal a container prior to placing projection 400 over the outlet portion as was observed with the embodiment shown in Figures 1 to 5.

It is apparent from the foregoing disclosure, the bracket and apparatus of the present invention according to various embodiments facilitates the way in which fluids are able to be dispensed from containers into various components (e.g., vehicle engines, transmissions etc.,) which are typically found in confined spaces and which are often difficult to reach. The bracket also serves to retain the hose in a rigid configuration, which prevents, or at least minimises, the risk of kinking of the hose during dispensing of fluid and thereby avoids, or at least minimises, any restriction in the flow of flow from the container.

The ability to retain the hose in a rigid configuration may also assist in avoiding any spillage of fluid during servicing of, for example, a motor vehicle, which would be desirable from the perspective of an individual that prefers to personally undertake the servicing, or at least a portion of the servicing, of their own motor vehicle.

The bracket and apparatus of the present invention also enables the bracket (with hose) to be retained on the container during storage and/or when the apparatus is on display and offered for sale, without interfering with any advertising material located on the exterior surface of the container. Issues associated with limited shelving space and or height restrictions associated with shelving space, may also be addressed with various embodiments of the apparatus of the present invention, since the bracket (and hose) of the apparatus, when in a "display"/"storage" mode, does not substantially extend beyond the perimeter of the container to which is connected.

Throughout this specification and the claims which follow, unless the context requires otherwise, the word "comprise", and variations such as "comprises" and "comprising", will be understood to mean the inclusion of a stated feature or step, or group of features or steps, but not the exclusion of any other feature or step, or group of features or steps.

The reference to any prior art in this specification is not, and should not be taken as an acknowledgement, or any suggestion that, the prior art forms part of the common general knowledge.

## Claims

1. A bracket (10) configured to accommodate a hose (45) operable to dispense fluid, the bracket (10) including:
at least first (15) and second (20) portions extending along two different axes such that when the hose (45) is accommodated by the first (15) and second (20) portions of the bracket (10), the first (15) and second (20) portions cause the hose (45) to bend;
wherein
a distal end of the first portion (15) is in the form of an annular ring (25) and a distal end of the second portion (20) is in the form of a curved arm (30); and **characterised in that**:
the bracket (10) further includes at least one projection (40) configured to engage an outlet portion (60) of a container (65) within which the fluid that is to be dispensed is contained to thereby retain the bracket (10) in connection with the container (65) when the container (65) is in a sealed state.

2. A bracket according to claim 1, wherein the two axes are oriented substantially between 80 degrees and 100 degrees relative to one another.

3. A bracket according to either claim 1 or claim 2, wherein the two axes are oriented substantially at 90 degrees relative to one another.

4. An apparatus configured to facilitate the dispensing of fluid from a container (65), the apparatus including:
a hose (45) defining a first flow diameter operable to dispense fluid,
an adapter (55) defining a second flow diameter, the adapter (55) configured to connect one end of the hose (45) to an outlet portion (60) of the container (65), the outlet portion (60) of the container (65) defining a third flow diameter; and
a bracket according to any one of claims 1 to 3.

5. An apparatus according to claim 4, wherein the first, second and third flow diameters are substantially the same.

6. An apparatus according to either claim 4 or claim 5, wherein the two axes are oriented substantially between 80 degrees and 100 degrees relative to one another.

7. An apparatus according to any one of claims 4 to 6, wherein the two axes are oriented substantially at 90 degrees relative to one another.

8. An apparatus according to any one of claims 4 to 7, wherein the container (65) is fabricated from a flexible material thereby enabling the fluid contained within the container (65) to be dispensed by the application of an external compressive force to the container (65).

9. A method of dispensing fluid from a container (65), the method including:
accommodating a hose (45) operable to dispense fluid from the container (65) by a bracket (10) according to any one of claims 1 to 3;
attaching a first end of the hose (45) to an outlet portion (60) of the container (65) whilst the hose (45) is accommodated by the bracket (45); and
applying an external compressive force to the container (65) in order to cause fluid contained within the container (65) to be dispensed.

10. A method of retaining a bracket (10) according to any one of claims 1 to 3, and a fluid dispensing hose (45) on a container (65) when the container (65) is in a sealed state, the method including:
accommodating the hose (45) by the bracket (10); and
engaging the at least one projection (40) on the bracket (10) with the outlet portion (60) of the container (65).

11. A fluid dispensing assembly including:
a container (65) including:
a substantially upright body;
an outlet portion (60) extending from an upper front corner of the container (65) at a substantially obtuse angle relative to the upright body of the container (65);
a bracket (10) according to any one of claims 1 to 3 for accommodating a hose (45); and
a projection (40) configured to engage the outlet portion (60) of the container (65);
wherein
the projection (40) is arranged relative to the first (15) and second (20) portions of the bracket (10) such that when the projection (40) and outlet portion (60) of the container (65) are engaged, the bracket (10) is retained against the upright body the container (65); and
the projection (40) is angled relative to the first (15) and second (20) portions of the bracket (10) such that when the projection (40) and the outlet portion (60) of the container (65) are engaged, one portion of the first (15) and second (20) portions of the bracket (10) extends substantially horizontally along a top edge of the container (65) and the other portion of the first (15) and second (20) portions of the bracket (10) extends substantially downwardly along the upright body of the container (65).

## Patentansprüche

1. Halterung (10), die zur Aufnahme eines zur Abgabe von Flüssigkeit einsetzbaren Schlauchs (45) ausgelegt ist, wobei die Halterung (10) aufweist:
mindestens einen ersten Abschnitt (15) und einen zweiten Abschnitt (20), die sich derart entlang zweier verschiedener Achsen erstrecken, dass dann, wenn der Schlauch (45) von dem ersten Abschnitt (15) und dem zweiten Abschnitt (20) aufgenommen ist, der erste Abschnitt (15) und der zweite Abschnitt (20) ein Biegen des Schlauchs (45) bewirken;
wobei ein distales Ende des ersten Abschnitts (15) in Form eines geschlossenen Rings (25) ist und ein distales Ende des zweiten Abschnitts (20) in Form eines gebogenen Arms (30) ist; und **dadurch gekennzeichnet, dass**:
die Halterung (10) weiter mindestens einen Vorsprung (40) aufweist, der dazu ausgelegt ist, mit einem Auslassabschnitt (60) eines Behälters (65) zu koppeln, in dem die abzugebende Flüssigkeit aufbewahrt wird, um somit die Halterung (10) in Verbindung mit dem Behälter (65) zu halten, wenn der Behälter (65) in einem verschlossenen Zustand ist.

2. Halterung nach Anspruch 1, wobei die zwei Achsen im Wesentlichen in einem Winkel zwischen 80 Grad und 100 Grad zueinander ausgerichtet sind.

3. Halterung nach Anspruch 1 oder Anspruch 2, wobei die zwei Achsen im Wesentlichen in einem 90-Grad-Winkel zueinander ausgerichtet sind.

4. Vorrichtung, die dazu ausgelegt ist, die Abgabe einer Flüssigkeit aus einem Behälter (65) zu vereinfachen, wobei die Vorrichtung umfasst:
einen Schlauch (45), der einen zur Abgabe von Flüssigkeit einsetzbaren ersten Durchflussdurchmesser definiert,
einen Adapter (55), der einen zweiten Durchflussdurchmesser definiert, wobei der Adapter (55) dazu ausgelegt ist, ein Ende des Schlauchs (45) mit einem Auslassabschnitt (60) des Behälters (65) zu verbinden, wobei der Auslassabschnitt (60) des Behälters (65) einen dritten Durchflussdurchmesser definiert; und
eine Halterung nach einem der Ansprüche 1 bis 3.

5. Vorrichtung nach Anspruch 4, wobei der erste, zweite und dritte Durchflussdurchmesser im Wesentlichen gleich sind.

6. Vorrichtung nach Anspruch 4 oder 5, wobei die zwei Achsen im Wesentlichen in einem Winkel zwischen 80 Grad und 100 Grad zueinander ausgerichtet sind.

7. Vorrichtung nach einem der Ansprüche 4 bis 6, wobei die zwei Achsen im Wesentlichen in einem 90-Grad-Winkel zueinander ausgerichtet sind.

8. Vorrichtung nach einem der Ansprüche 4 bis 7, wobei der Behälter (65) aus einem flexiblen Material gefertigt ist, wodurch ermöglicht wird, dass die in dem Behälter (65) enthaltene Flüssigkeit durch Ausübung einer äußeren Druckkraft auf den Behälter (65) abgegeben wird.

9. Verfahren zum Abgeben von Flüssigkeit aus einem Behälter (65), wobei das Verfahren aufweist:
Aufnehmen eines zur Abgabe von Flüssigkeit aus einem Behälter einsetzbaren Schlauchs (45) mittels einer Halterung (10) nach einem der Ansprüche 1 bis 3;
Anbringen eines ersten Endes des Schlauchs (45) an einem Auslassabschnitt (60) des Behälters (65), während der Schlauch (45) von der Halterung (45) aufgenommen ist; und
Ausüben einer äußeren Druckkraft auf den Behälter (65), um zu bewirken, dass im Behälter (65) enthaltene Flüssigkeit abgegeben wird.

10. Verfahren zum Halten einer Halterung (10) nach einem der Ansprüche 1 bis 3 und eines Flüssigkeit abgebenden Schlauchs (45) an einem Behälter (65), wenn der Behälter (65) in einem verschlossenen Zustand ist, wobei das Verfahren aufweist:
Aufnehmen des Schlauchs (45) mittels der Halterung (10); und
Koppeln des mindestens einen Vorsprungs (40) an der Halterung (10) mit dem Auslassabschnitt (60) des Behälters (65).

11. Flüssigkeitsabgabevorrichtung, aufweisend:
einen Behälter (65) aufweisend:
einen im Wesentlichen aufrecht stehenden Körper;
einen Auslassabschnitt (60), der sich von einer oberen vorderen Ecke des Behälters (65) in einem im Wesentlichen stumpfen Winkel bezüglich des aufrecht stehenden Körpers des Behälters (65) erstreckt;
eine Halterung (10) nach einem der Ansprüche 1 bis 3 zum Aufnehmen eines Schlauchs (45); und
einen Vorsprung (40), der dazu ausgelegt ist, mit dem Auslassbereich (60) des Behälters (65) zu koppeln;
wobei
der Vorsprung (40) derart bezüglich des ersten Abschnitts (15) und des zweiten Abschnitts (20) der Halterung (10) angeordnet ist, dass dann, wenn der Vorsprung (40) und der Auslassbereich (60) des Behälters (65) gekoppelt sind, die Halterung (10) gegen den aufrecht stehenden Körper des Behälters (65) gehalten wird; und
der Vorsprung (40) bezüglich des ersten Abschnitts (15) und des zweiten Abschnitts (20) der Halterung (10) derart angewinkelt ist, dass sich dann, wenn der Vorsprung (40) und der Auslassbereich (60) des Behälters (65) gekoppelt sind, ein Bereich des ersten Abschnitts (15) und des zweiten Abschnitts (20) der Halterung (10) im Wesentlichen horizontal entlang eines oberen Randes des Behälters (65) erstreckt und sich der andere Bereich des ersten Abschnitts (15) und des zweiten Abschnitts (20) der Halterung (10) im Wesentlichen abwärts entlang des aufrecht stehenden Körpers des Behälters (65) erstreckt.

## Revendications

1. Support (10) configuré pour accueillir un tuyau (45) opérationnel pour distribuer un fluide, le support (10) comprenant :
au moins de première (15) et seconde (20) parties s'étendant le long de deux axes différents de sorte que lorsque le tuyau (45) est accueilli par les première (15) et seconde (20) parties du support (10), les première (15) et seconde (20) parties amènent le tuyau (45) à se courber ;
dans lequel une extrémité distale de la première (15) partie se présente sous la forme d'un anneau annulaire (25) et une extrémité distale de la seconde (20) partie se présente sous la forme d'un bras incurvé (30) ; et
**caractérisé en ce que** :
le support (10) comprend en outre au moins une saillie (40) configurée pour venir en prise avec une partie de sortie (60) d'un récipient (65) à l'intérieur duquel le fluide à distribuer est contenu pour retenir ainsi le support (10) en liaison avec le récipient (65) lorsque le récipient (65) est dans un état scellé.

2. Support selon la revendication 1, dans lequel les deux axes sont orientés sensiblement entre 80 degrés et 100 degrés l'un par rapport à l'autre.

3. Support selon la revendication 1 ou la revendication 2, dans lequel les deux axes sont orientés sensiblement à 90 degrés l'un par rapport à l'autre.

4. Appareil configuré pour faciliter la distribution de fluide à partir d'un récipient (65), l'appareil comprenant :
un tuyau (45) définissant un premier diamètre d'écoulement opérationnel pour distribuer un fluide,
un adaptateur (55) définissant un deuxième diamètre d'écoulement, l'adaptateur (55) configuré pour relier une extrémité du tuyau (45) à une partie de sortie (60) du récipient (65), la partie de sortie (60) du récipient (65) définissant un troisième diamètre d'écoulement ; et
un support selon l'une quelconque des revendications 1 à 3.

5. Appareil selon la revendication 4, dans lequel les premier, deuxième et troisième diamètres d'écoulement sont sensiblement les mêmes.

6. Appareil selon la revendication 4 ou la revendication 5, dans lequel les deux axes sont orientés sensiblement entre 80 degrés et 100 degrés l'un par rapport à l'autre.

7. Appareil selon l'une quelconque des revendications 4 à 6, dans lequel les deux axes sont orientés sensiblement à 90 degrés l'un par rapport à l'autre.

8. Appareil selon l'une quelconque des revendications 4 à 7, dans lequel le récipient (65) est fabriqué à partir d'un matériau flexible permettant ainsi au fluide contenu dans le récipient (65) d'être distribué par l'application d'une force de compression externe sur le récipient (65).

9. Procédé de distribution de fluide à partie d'un récipient (65), le procédé comprenant :
l'accueil d'un tuyau (45) opérationnel pour distribuer un fluide à partir du récipient (65) par un support (10) selon l'une quelconque des revendications 1 à 3 ;
la fixation d'une première extrémité du tuyau (45) à une partie de sortie (60) du récipient (65) tandis que le tuyau (45) est accueilli par le support (45) ; et
l'application d'une force de compression externe sur le récipient (65) pour amener le fluide contenu à l'intérieur du récipient (65) à être distribué.

10. Procédé de retenue d'un support (10) selon l'une quelconque des revendications 1 à 3, et d'un tuyau (45) de distribution de fluide sur un récipient (65) lorsque le récipient (65) est dans un état scellé, le procédé comprenant :
l'accueil du tuyau (45) par le support (10) ; et
la mise en prise d'au moins une saillie (40) sur le support (10) avec la partie de sortie (60) du récipient (65).

11. Ensemble de distribution de fluide comprenant :
un récipient (65) comprenant :
un corps sensiblement droit ;
une partie de sortie (60) s'étendant à partir d'un coin avant supérieur du récipient (65) à un angle sensiblement obtus par rapport au corps droit du récipient (65) ;
un support (10) selon l'une quelconque des revendications 1 à 3 pour accueillir un tuyau (45) ; et
une saillie (40) configurée pour venir en prise avec la partie de sortie (60) du récipient (65) ;
dans lequel
la saillie (40) est agencée par rapport aux première (15) et seconde (20) parties du support (10) de sorte que lorsque la saillie (40) et la partie de sortie (60) du récipient (65) sont mises en prise, le support (10) est retenu contre le corps droit du récipient (65) ; et
la saillie (40) est inclinée par rapport aux première (15) et seconde (20) parties du support (10) de sorte que lorsque la saillie (40) et la partie de sortie (60) du récipient sont mises en prise, une partie des première (15) et seconde (20) parties du support (10) s'étend sensiblement horizontalement le long d'un bord supérieur du récipient (65) et l'autre partie des première (15) et seconde (20) parties du support (10) s'étend sensiblement vers le bas le long du corps droit du récipient (65).
